# EUROPÄISCHE PATENTSCHRIFT

(11) **EP 2 618 470 B1**
(45) Veröffentlichungstag und Bekanntmachung des Hinweises auf die Patenterteilung: **28.04.2021**
(21) Anmeldenummer: 13000158.9
(22) Anmeldetag: 14.01.2013
(51) Int. Cl.: H02S 50/10, H02M 3/335, H02M 1/00

(54) **Mehrkanalig geregelter DC/DC-Wandler zur redundanten Spannungsversorgung in der Sicherheitstechnik**
Multichannel regulated DC/DC converter for redundant voltage supply in safety technology
Convertisseur CC/CC réglé à plusieurs canaux destiné à l'alimentation en tension redondante dans la technique de sécurité

(30) Priorität: 17.01.2012 DE 102012000683
(43) Veröffentlichungstag der Anmeldung: 24.07.2013
(73) Patentinhaber: PHOENIX CONTACT GmbH & Co. KG, 32825 Blomberg (DE)
(72) Erfinder: Oster, Viktor, 32825 Blomberg (DE)
(74) Vertreter: Bill, Burkart Hartmut

(56) Entgegenhaltungen:
- EP-A2- 0 772 284
- EP-A2- 1 753 118
- US-A- 6 038 150
- US-A1- 2006 181 230

## Beschreibung

Die vorliegende Erfindung betrifft einen primärseitig geregelten Gleichspannungswandler mit wenigstens zwei redundanten Spannungsversorgungsausgängen.

Um die Anforderungen bezüglich der Zuverlässigkeit und der Verfügbarkeit bei sicherheitsgerichteten Funktionen in der Automatisierungstechnik zu erfüllen, werden entsprechende Systeme häufig redundant aufgebaut. Die Sicherheitstechnik, d.h. die sichere Automatisierungstechnik nutzt in ihren Systemen hierzu in der Regel mehrkanalige Geräte bzw. Baugruppen, die jeweils wenigstens zwei voneinander unabhängige Kanäle zur redundanten Datenverarbeitung besitzen. Die interne Verarbeitungslogik jedes redundanten Kanals wird mit einer geregelten Betriebsgleichspannung versorgt, die jeweils mittels eines eigenen Gleichspannungswandlers (DC/DC-Wandlers) zum Beispiel aus einer im Automatisierungssystem, d.h. anlagenweit bereitgestellten Versorgungsgleichspannung durch Heruntersetzen dieser Spannung gewonnen wird.

Bei einzelnen sicherheitstechnischen Anwendungen kann eine galvanische Trennung zwischen der Versorgungsspannung und der jeweilig geregelten Betriebsspannung notwendig sein.

Ein DC/DC-Wandlertyp mit galvanischer Trennung zwischen Ein- und Ausgang ist dem Fachmann beispielsweise unter der Bezeichnung Sperrwandler (im englischen: *flyback-converter*) bekannt. Ein Sperrwandler gehört zu der Gattung der primär getakteten Schaltnetzteile und umfasst zwischen seinem Ein- und Ausgangskreis einen sogenannten Speichertransformator, einen Übertrager mit einer Primärwicklung und wenigstens einer Sekundärwicklung.

Der Primärkreis des Übertragers ist über ein mittels Pulsweitenmodulation (PWM) getaktetes Schaltelement mit der Versorgungsspannung bzw. Eingangsspannung verbunden. Ein Sekundärkreis umfasst im Wesentlichen eine Diode sowie einen Speicherkondensator, der mit dem Ausgangsanschluss für die bereitzustellende Betriebs- bzw. Ausgangsspannung verbunden ist.

Die Sekundärseitige DC-Ausgangsspannung hängt neben der Höhe der primärseitigen DC-Eingangsspannung im Wesentlichen vom Puls-Pause-Verhältnis des PWM-Signals ab, das mittels einer geschlossenen Regelschiefe zur Stabilisierung der Ausgangsspannung ausgeregelt werden kann.

Zum Bereitstellen mehrerer geregelter Ausgangsspannungen als Betriebsspannungen einer entsprechenden Anzahl von redundanten Logikkanälen ist für jeden Kanal eine separate Sperrwandlerschaltung mit je einem Übertrager erforderlich.

Eine solche mehrkanalige Gleichspannungswandlereinrichtung mit mehreren parallelen Sperrwandlern bedingt einen hohen Bauteilaufwand und einen großen Platzbedarf innerhalb eines sicherheitsgerichteten Geräts oder einer sicherheitsgerichteten Baugruppe.

Dokument US 6 038 150 A beschreibt einen Spannungswandler mit mehreren Ausgängen, wobei eine sekundäre Teilschaltung der Wandlerschaltung einen Transistor zum Verhindern einer Rückwärtsleitung des Stroms in der sekundären Teilschaltung umfasst.

Dokument EP 0 772 284 A2 beschreibt eine Schaltungsanordnung zur Erzeugung von betragsmäßig unterschiedlichen Gleichspannungen, bei welcher ein getakteter Wandler eingesetzt wird, der einen Transformator mit einer Eingangswicklung und mindestens einer Ausgangswicklung aufweist.

Dokument US 2006/181230 A1 offenbart einen Schaltregler mit einem Transformator mit einer Sekundärwicklung und mehreren parallelen spannungsgeregelten Ausgangskreisen.

Die Erfindung hat sich somit die Aufgabe gestellt, einen zumindest zweikanaligen Gleichspannungswandler bereitzustellen, der zwei stabilisierte Ausgangsspannungen zur Versorgung redundanter Systeme der Sicherheitstechnik bereitstellt und der nur einen Übertrager zur galvanischen Trennung benötigt.

Zur Lösung dieser Aufgabe schlägt die vorliegende Erfindung einen Gleichspannungswandler gemäß dem Anspruch 1 vor. Bevorzugte und vorteilhafte Ausgestaltungen sind Gegenstand der Unteransprüche.

Der Gleichspannungswandler zur Versorgung redundanter Systeme in der Sicherheitstechnik mit einem ersten und wenigstens einem zweiten Verarbeitungskanal umfasst einen Übertrager, ein Schaltelement, einen Pulsweitenmodulator, eine Regeleinrichtung sowie einen ersten und wenigstens einen zweiten Ausgangskreis. Der Übertrager ist primärseitig über das Schaltelement mit einer Eingangsspannung ansteuerbar verbunden und stellt sekundärseitig an dem ersten und zweiten Ausgangskreis jeweils eine Ausgangsspannung bereit.

Eine erste Ausgangsspannung dient zur Versorgung eines ersten Verarbeitungskanals, die zweiten Ausgangsspannungen dienen zur Versorgung der zweiten Verarbeitungskanäle.

Der Pulsweitenmodulator steuert das primärseitige Schaltelement gepulst an. Die Regeleinrichtung ist dem ersten Ausgangskreis zugeordnet und dazu ausgebildet, den Pulsweitenmodulator derart zu regeln, dass eine erste Ausgangsspannung des ersten Ausgangskreises stabilisiert, d.h. auf einen festgelegten Spannungswert ausgeregelt ist.

Erfindungsgemäß ist dem zweiten Ausgangskreis des Gleichspannungswandlers ein ausgangsseitiger Spannungsregler zugeordnet, der ausgebildet ist, eine zweite Ausgangsspannung des zweiten Ausgangskreises zu stabilisieren.

Erfindungsgemäß besitzt der Übertrager sekundärseitig eine einzige Sekundärwicklung.

Dazu sind die jeweiligen zweiten Ausgangskreise parallel zu dem ersten Ausgangskreis an der ersten Sekundärwicklung angeschlossen.

Der erste Ausgangkreis besitzt wenigstens eine weitere Diode, die mit einer ersten Diode im Ausgangskreis in Reihe geschaltet ist.

Der erfindungsgemäße Gleichspannungswandler ist ein primär geregelter Sperrwandler, der zwei geregelte Spannungen mit lediglich einem einzigen Übertrager bereitstellt, und somit zur Versorgung von zwei redundanten Logikkanälen sicherer Geräte geeignet ist.

Die weiteren Dioden stellen eine Offset-Spannung zwischen dem ersten Ausgangskreis und den zweiten Ausgangskreis bereit. Die Offset-Spannung ermöglicht den Spannungsreglern der zweiten Ausgangskreise, ihre jeweilige Ausgangsspannung auf den gleichen Wert, wie die des ersten Ausgangskreises auszuregeln.

Zwischen der Regeleinrichtung und dem Pulsweitenmodulator kann vorzugsweise ein Optokoppler angeordnet sein, der eine einfache und sichere galvanische Trennung zwischen einer Eingangsspannung und zwei Ausgangsspannungen ermöglicht.

Der erste Ausgangskreis kann einen ersten Ausgangsanschluss umfassen, der über weinigstes eine Diode mit der Sekundärseite des Übertragers verbunden ist. Eine erste Speicherkapazität des ersten Ausgangskreises ist zum ersten Ausgangsanschluss parallel geschaltet.

Der Spannungsregler jedes zweiten Ausgangskreises stellt bevorzugt jeweils einen zweiten Ausgangsanschluss bereit, wobei der Spannungsregler jeweils über eine zweite Diode mit der Sekundärseite des Übertragers (11) verbunden ist. Eine zweite Speicherkapazität kann eingangseitig zu jedem Spannungsregler parallel sein.

Der Spannungsregler jedes zweiten Ausgangskreises ist bevorzugt dazu ausgebildet, eine Überspannung an der ersten Sekundärwicklung auszuregeln.

Der erste und die zweiten Ausgangskreise stellen somit wenigstens zwei im Wesentlichen unabhängig voneinander stabilisierte Ausgangsspannungen bereit, die eine redundante und diversitäre Versorgung für die redundanten Verarbeitungskanäle bei Geräten in der Sicherheitstechnik gewährleistet.

In einer alternativen Ausführung kann der Übertrager auf seiner Sekundärseite eine erste Sekundärwicklung sowie wenigstens eine zweite Sekundärwicklung besitzen.

In diesem Fall kann der erste Ausgangskreis mit der ersten Sekundärwicklung verbunden sein.
Die zweiten Ausgangskreise können jeweils mit einer aus einer Anzahl von zweiten Sekundärwicklungen verbunden sein.

Alternativ können die zweiten Ausgangskreise mit einer einzigen zweiten Sekundärwicklung parallel geschaltet verbunden sein.

Eine Offset-Spannung für die Spannungsregler der zweiten Ausgangskreise kann in einfacher Weise über unterschiedliche Windungszahlen zwischen der ersten und den zweiten Sekundärwicklungen gewährleistet werden.

Der Spannungsregler jedes zweiten Ausgangskreises ist vorzugsweise dazu ausgebildet, eine Überspannung an einer zweiten Sekundärwicklung auszuregeln.

Die Erfindung wird nachfolgend anhand von zwei beispielhaften Ausführungsformen unter Bezugnahme der beigefügten Zeichnungen detailliert beschrieben. In den Zeichnungen zeigen:
- Fig. 1: ein Schaltbild einer ersten erfindungsgemäßen Ausführungsform eines DC/DC-Wandlers zum Bereitstellen von zwei stabilisierten Ausgangsspannungen,
- Fig. 2: ein Schaltbild einer zweiten Ausführungsform eines DC/DC-Wandlers außerhalb der Erfindung zum Bereitstellen von zwei stabilisierten Ausgangsspannungen.

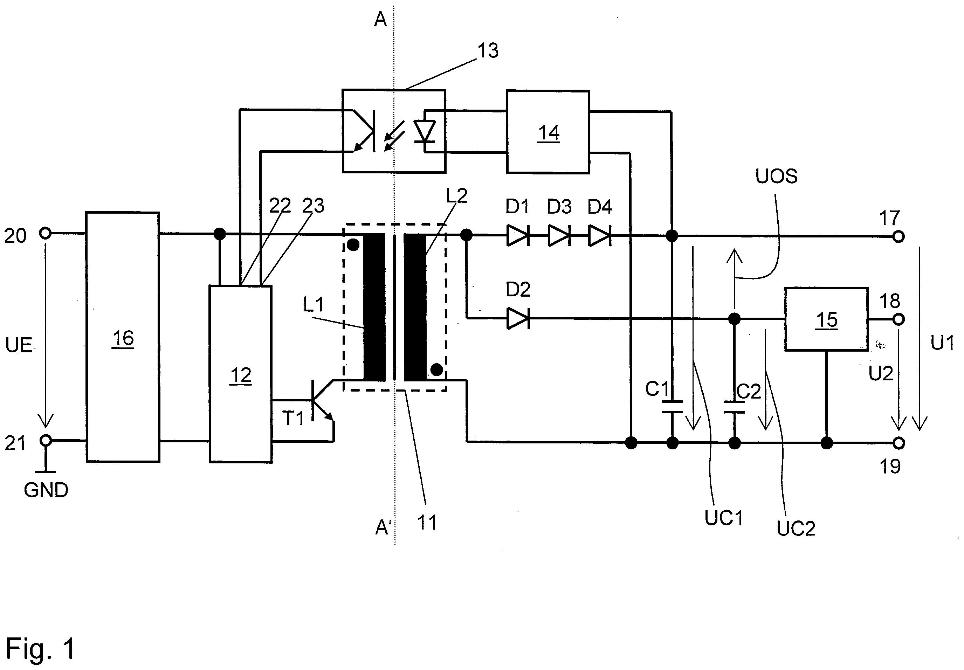

In der Figur 1 ist das Schaltbild einer ersten bevorzugten Ausführungsform einer erfindungsgemäßen Schaltung für einen Gleichspannungswandler (DC/DC-Wandler) dargestellt.

Mit der punktierten Linie A-A' in der Zeichnung wird eine galvanische Trennung zwischen der Primärseite und der Sekundärseite des DC/DC-Wandlers angedeutet. Rechts der Linie A-A' ist die Sekundärseite des DC/DC-Wandlers dargestellt, an der zwei Ausgangsspannungen U1 und U2 bereitgestellt werden. Links der Linie A-A' befindet sich die Primärseite des Wandlers, an der die Eingangsspannung UE anliegt, die beispielsweise höher als die auszugebenden Spannungen U1 und U2 ist.

Die galvanische Trennung zwischen Primär- und Sekundärseite erfolgt mit einem Übertrager 11, der eine primärseitige Wicklung L1 und eine sekundärseitige Wicklung L2 besitzt.

Die primärseitige Wicklung L1 des Übertragers ist schaltbar über ein Schaltelement T1 mit der Eingangsgleichspannung UE verbunden, die zwischen den Anschlussklemmen 20 und 21 anliegt. Direkt an diesen beiden Eingangsklemmen 20 und 21 kann eine EMV-Filtereinrichtung 16 vorgesehen sein. Die Eingangsspannung UE kann beispielsweise 24 VDC betragen.

Das Schaltelement T1 ist in der Zeichnung beispielhaft als npn-Bipolartransistor dargestellt. Alternativ können auch MOSFET oder vergleichbare Halbleiterschalter verwendet werden, die über ein elektrisches Signal ansteuerbar sind. Der dargestellte npn-Bipolartransistor T1 wird von einer pulsweitenmodulierten Steuerspannung (PWM-Signal) ein- und ausgeschaltet, die von der Ansteuereinrichtung 12 bereitgestellt wird. Die Ansteuereinrichtung 12 umfasst einen Pulsweitenmodulator und wird von der primärseitigen Eingangsspannung UE versorgt, wobei die Eingangsspannung beispielsweise 24 VDC beträgt.

Die Ansteuereinrichtung 12 umfasst zwei Signaleingänge 22 und 23, über die ein Stellsignal bereitgestellt werden kann, mit dem beispielsweise der Tastgrad des PWM-Signals, d.h. das Verhältnis zwischen Impulsdauer und Periodendauer variierbar bzw. einstellbar ist.

Der Übertrager 11 arbeitet im Wesentlichen als eine Art Speicherdrossel mit sekundärseitiger Wicklung L2. Während der Leitendphase des Transistors T1 wird Energie in dem Übertrager 11 gespeichert, die während der Sperrphase des Transistors T1 an die Sekundärseite abgegeben wird.

An der sekundärseitige Wicklung L2 werden der erste und der zweite Ausgangsstromkreis bereitgestellt. Der erste und zweite Ausgangsstromkreis wird im Folgenden auch als erster und zweite Ausgangskreis oder als erster und zweiter Kanal bezeichnet.

Zwischen dem ersten Ausgangsanschluss 17 des ersten Kanals und dem Ausgangsbezugspotentialanschluss 19 wird die erste Ausgangsspannung U1 bereitgestellt. Zwischen dem zweiten Ausgangsanschluss 18 des zweiten Ausgangskreises und dem Ausgangsbezugspotentialanschluss 19 wird die zweite Ausgangsspannung U2 bereitgestellt.

Zu den beiden Ausgangsanschlüssen 17 und 19 des ersten Kanals ist eine erste Speicherkapazität C1 parallel geschaltet, die über wenigstens eine erste Diode D1 mit der sekundärseitigen Wicklung L2 des Übertragers 11 verbunden ist.

Zur ersten Speicherkapazität C1 ist eine Regeleinrichtung 14 parallel geschaltet, mit der die an dem Kondensator C1 anliegende Spannung UC1, die gleich der Ausgangsspannung U1 ist, erfasst wird. Die Regeleinrichtung 14 kann z.B. einen nicht dargestellten Komparator umfassen, der ausgebildet ist, die Ausgangsspannung U1 mit einem Referenzwert einer internen Referenzspannungsquelle der Regeleinrichtung 14 zu vergleichen. Als Sollwert für die Ausgangsspannung U1 kommt beispielsweise eine Spannung von 5 VDC in Betracht, die zum Betrieb der Logikbausteine innerhalb einer jeweiligen mit Spannung zu versorgenden Baugruppe geeignet ist.

Weicht die Ausgangsspannung U1 beispielsweise infolge von Lastschwankungen an dem ersten Ausgangsstromkreis von ihrem Sollwert ab, so erzeugt der Komparator ein Fehlersignal, das dem Wert einer Spannungsabweichung entspricht.

Das in der Regeleinrichtung 14 erzeugte Fehlersignal wird über den Optokoppler 13 galvanisch getrennt als Stellsignal an die primärseitige Ansteuereinrichtung 12 übertragen. Der Tastgrad des von der Ansteuereinrichtung 12 zur Ansteuerung des Transistors T1 bereitgestellten PWM-Signals wird derart angepasst, dass die sekundärseitige erste Ausgangsspannung U1 des ersten Kanals durch einen geänderten Energiefluss über den Übertrager 11 primärseitig auf ihren Sollwert ausregelbar ist.

Der zweite Kanal bzw. Ausgangsstromkreis ist parallel zu dem ersten Kanal an der sekundärseitigen Wicklung L2 des Übertragers 11 angeschlossen und umfasst die zweite Diode D2 sowie die zweite Speicherkapazität C2.

Im Unterschied zum ersten Ausgangskreis umfasst der zweite Kanal zusätzlich einen Spannungsregler 15, der zwischen dem zweiten Speicherkondensator C2 und dem zweiten Ausgangsanschluss 18 angeordnet ist. Der Spannungsregler 15 ist beispielsweise als ein sog. Low-Drop-Regler ausgeführt und soll die zweite Ausgangsspannung U2 unabhängig von dem ersten Ausgangskreis auf den gleichen Spannungswert von 5 VDC stabilisieren.

Damit der sekundärseitige Spannungsregler 15 des zweiten Ausgangskreises arbeiten kann, muss am Spannungseingang des Reglers, d.h. an dem zweiten Speicherkondensator C2 eine Spannung UC2 anliegen, die größer ist, als die Spannung U2, die am Ausgang ausgegeben werden soll. Zu diesen Zweck sind in dem ersten Ausgangskreis die beiden zusätzlichen Dioden D3 und D4 vorgesehen, die jeweils eine Vorwärtsspannung von beispielsweise 0,6 V besitzen. Beide Kondensatorspannungen UC1 und UC2 werden aus der selben Spannung gespeist, die an der Sekundärwicklung L2 bereitsteht. Durch die zwei Dioden D3 und D4 wird die an dem Speicherkondensator C2 anliegende Spannung UC2 um 1,2 V Offset-Spannung UOS gegenüber den primärseitig auf 5 VDC geregelten Spannung UC1 des ersten Kondensators C1 erhöht.

Die Spannung UC2 von 6,2 V am Eingang des Spannungsreglers 15 reicht aus, um an dem zweiten Spannungsanschluss 18 eine stabilisierte zweite Ausgangsspannung U2 von 5 V bereitzustellen.

Die in der Figur 1 dargestellte Schaltung zeigt einen primär geregelten Sperrwandler, der parallel zwei stabilisierte Ausgangsspannungen U1 und U2 bereitstellt.

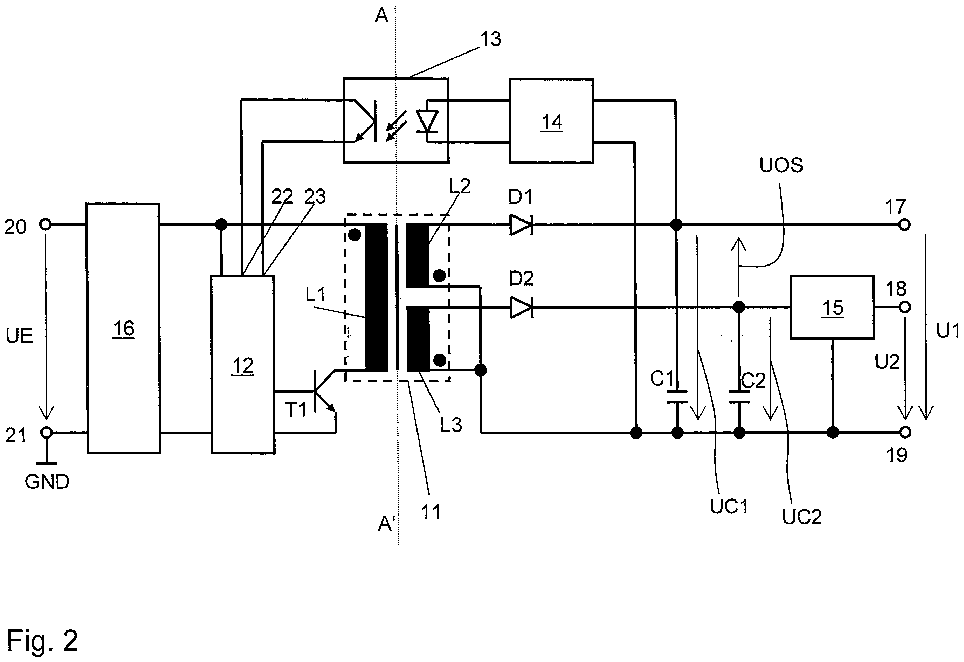

In der Figur 2 ist eine alternative Ausführungsform eines Gleichspannungswandlers außerhalb der Erfindung dargestellt, der sich von der zuvor beschriebenen Schaltung im Aufbau seiner Sekundärseite unterscheidet.

An Stelle einer einzigen Sekundärwicklung umfasst der in Figur 2 dargestellte Übertrager 11 eine erste und eine zweite Sekundärwicklung L2 und L3. An der ersten der beiden Sekundärwicklungen L2 wird der erste Kanal bereitgestellt, an der zweiten Sekundärwicklung L3 wird der zweite Kanal des Gleichspannungswandlers bereitgestellt.

Beide Ausgangsstromkreise verfügen jeweils über eine Diode D1 bzw. D2 und über einen Speicherkondensator C1 bzw. C2. Der zweite Kanal des Gleichspannungswandlers besitzt, wie bei dem in der Figur 1 bereits dargestellten Wandler, einen Spannungsregler, der zwischen dem Speicherkondensator C2 und dem zweiten Ausgangsanschluss 18 angeordnet ist.

Die Regeleinrichtung 14 zur primärseitigen Regelung des Gleichspannungswandlers ist zum Speicherkondensator C1 des ersten Ausgangskreises parallel geschaltet, so dass die am Speicherkondensator C1 anliegende Spannung UC1, die der erste Ausgangsspannung U1 entspricht, als Istwert für eine Regelung herangezogen werden kann. Die Ausgangsspannung U1 wird somit über den auf die Primärseite zurückgeführten Regelkreis auf beispielsweise 5 VDC stabilisiert.

Die zweite Ausgangsspannung U2 des Gleichspannungswandlers soll ebenfalls auf 5 VDC stabilisiert werden. Der zu diesem Zweck vorgesehene Spannungswandler 15 benötigt zur eigenen Spannungsversorgung und als Regelreserve am Eingang eine Spannung UC2, die größer ist, als die Ausgangsspannung U2 von z.B. 5 V. Die an dem zweiten Speicherkondensator C2 anliegende Spannung UC2 ist somit auch gegenüber der an dem ersten Speicherkondensator C1 anliegende Spannung UC1 um eine Offset-Spannung UOS erhöht.

Im Gegensatz zu der in Figur 1 dargestellten Schaltung kann die notwendige Offset-Spannung UOS im Wicklungsverhältnis zwischen der ersten und zweiten Sekundärwicklung L2 und L3 berücksichtigt werden. Die zusätzlichen Dioden D3 und D4 im ersten Ausgangskreis werden in der Ausführungsform gemäß Figur 2 nicht benötigt.

### Bezugszeichenliste

- 11: Übertrager
- L1: Primärwicklung
- L2: erste Sekundärwicklung
- L3: zweite Sekundärwicklung
- 12: Pulsweitenmodulator (PWM)
- 13: Optokoppler
- 14: Regeleinrichtung
- 15: Spannungsregler
- 16: Filter
- 17: erster Ausgangsanschluss
- 18: zweiter Ausgangsanschluss
- 19: Ausgangsbezugspotentialanschluss
- 20: Eingangsspannungsanschluss
- 21: Eingangsbezugspotentialanschluss / GND
- 22: erster Signaleingang
- 23: zweiter Signaleingang
- D1: erste Entkopplungsdiode
- D2: zweite Entkopplungsdiode
- D3: erste Diode
- D4: zweite Diode
- T1: Schaltelement
- C1: erste Kapazität
- C2: zweite Kapazität
- UE: Eingangsspannung
- U1: erste Ausgangsspannung
- U2: zweite Ausgangsspannung

## Patentansprüche

1. Gleichspannungswandler zur Versorgung redundanter Systeme in der Sicherheitstechnik mit einem ersten und wenigstens einem zweiten Verarbeitungskanal, umfassend einen Übertrager (11), der primärseitig über ein Schaltelement (T1) mit einer Eingangsspannung (UE) ansteuerbar verbunden ist und der sekundärseitig einen ersten und wenigstens einen zweiten Ausgangskreis zum Bereitstellen jeweils einer Ausgangsspannung (U1, U2) zur Versorgung jeweils eines Verarbeitungskanals besitzt,
einen Pulsweitenmodulator (12), der das primärseitige Schaltelement (T1) gepulst ansteuert, und eine Regeleinrichtung (14), wobei die Regeleinrichtung (14) dem ersten Ausgangskreis zugeordnet und dazu ausgebildet ist, den Pulsweitenmodulator (12) derart zu regeln, dass eine erste Ausgangsspannung (U1) des ersten Ausgangskreises stabilisiert ist,
und wobei
jedem zweiten Ausgangskreis ein ausgangsseitiger Spannungsregler (15) zugeordnet ist, der eine zweite Ausgangsspannung (U2) des jeweiligen zweiten Ausgangskreises stabilisiert,
der Übertrager (11) sekundärseitig eine einzige Sekundärwicklung (L2) besitzt,
die zweiten Ausgangskreise parallel zu dem ersten Ausgangskreis an der ersten Sekundärwicklung (L2) angeschlossen sind, und
der erste Ausgangkreis eine erste Diode (D1) umfasst,
**dadurch gekennzeichnet, dass** der erste Ausgangskreis wenigstens eine weitere Diode (D3, D4) umfasst, wobei die wenigstens eine weitere Diode (D3, D4) mit der ersten Diode (D1) in Reihe geschaltet ist.

2. Gleichspannungswandler gemäß dem vorstehenden Anspruch, **dadurch gekennzeichnet, dass** zwischen der Regeleinrichtung (14) und dem Pulsweitenmodulator (12) ein Optokoppler (13) angeordnet ist.

3. Gleichspannungswandler gemäß einem der vorstehenden Ansprüche, **dadurch gekennzeichnet, dass** der erste Ausgangskreis einen ersten Ausgangsanschluss (17) umfasst, der über die weinigstes eine Diode (D1) mit der Sekundärseite des Übertragers (11) verbunden ist, und wobei eine erste Speicherkapazität (C1) zum ersten Ausgangsanschluss (17) parallel geschaltet ist.

4. Gleichspannungswandler gemäß einem der vorstehenden Ansprüche, **dadurch gekennzeichnet, dass** der Spannungsregler (15) jedes zweiten Ausgangskreises einen zweiten Ausgangsanschluss (18) bereitstellt, wobei der Spannungsregler (15) jeweils über eine zweite Diode (D2) mit der Sekundärseite des Übertragers (11) verbunden ist, und wobei jeweils eine zweite Speicherkapazität (C2) zum Spannungsregler (15) eingangsseitig parallel geschaltet ist.

5. Gleichspannungswandler gemäß einem der vorstehenden Ansprüche 1 bis 4, **dadurch gekennzeichnet,**
**dass** der Spannungsregler (15) jedes zweiten Ausgangskreises ausgebildet ist, eine Überspannung an der ersten Sekundärwicklung (L2) auszuregeln.

## Claims

1. DC voltage converter for supplying redundant systems in safety engineering with a first and at least one second processing channel, comprising
a transformer (11) which is connected on the primary side via a switching element (T1) to an input voltage (UE) in a controllable manner and which has on the secondary side a first and at least one second output circuit for providing in each case an output voltage (U1, U2) for supplying one processing channel in each case,
a pulse-width modulator (12) which controls the primary-side switching element (T1) in pulsed manner, and a regulating device (14), the regulating device (14) being assigned to the first output circuit and being designed to regulate the pulse-width modulator (12) in such a way that a first output voltage (U1) of the first output circuit is stabilized, and wherein
each second output circuit is assigned a voltage regulator (15) on the output side which stabilises a second output voltage (U2) of the respective second output circuit, the transformer (11) has a single secondary winding (L2) on the secondary side,
the second output circuits are connected in parallel with the first output circuit to the first secondary winding (L2), and the first output circuit comprises a first diode (D1),
**characterized in that**
the first output circuit comprises at least one further diode (D3, D4), said at least one further diode (D3, D4) being connected in series with said first diode (D1).

2. DC voltage converter according to the preceding claim, **characterised in that** an optocoupler (13) is arranged between the regulating device (14) and the pulse width modulator (12).

3. DC voltage converter according to any one of the preceding claims, **characterized in that** the first output circuit comprises a first output terminal (17) connected to the secondary side of the transformer (11) via the at least one diode (D1), and wherein a first storage capacitance (C1) is connected in parallel to the first output terminal (17).

4. DC voltage converter according to one of the preceding claims, **characterized in that** the voltage regulator (15) of each second output circuit provides a second output terminal (18), the voltage regulator (15) being connected in each case via a second diode (D2) to the secondary side of the transformer (11), and in each case a second storage capacitor (C2) being connected in parallel with the voltage regulator (15) on the input side.

5. DC voltage converter according to any one of the preceding claims 1 to 4, **characterized in that** the voltage regulator (15) of each second output circuit is adapted to regulate an overvoltage at the first secondary winding (L2).

## Revendications

1. Convertisseur de tension continue destiné à alimenter des systèmes redondants dans la technologie de sécurité, avec un premier et au moins un deuxième canal de traitement, comprenant
un transmetteur (11) qui, côté primaire, est raccordé de façon attaquable à une tension d'entrée (UE) par le biais d'un élément de commutation (T1) et qui, côté secondaire, possède un premier et au moins un deuxième circuit de sortie pour fournir respectivement une tension de sortie (U1, U2) destinée à l'alimentation de respectivement un canal de traitement,
un modulateur de largeur d'impulsion (12) qui attaque de façon pulsée l'élément de commutation (T1) côté primaire,
et un équipement de régulation (14), l'équipement de régulation (14) étant affecté au premier circuit de sortie et étant constitué pour réguler le modulateur de largeur d'impulsion (12) de telle sorte qu'une première tension de sortie (U1) du premier circuit de sortie est stabilisée,
et dans lequel
un régulateur de tension (15) côté sortie est affecté à chaque deuxième circuit de sortie, qui stabilise une deuxième tension de sortie (U2) du deuxième circuit de sortie respectif,
le transmetteur (11) posséde côté secondaire un unique enroulement secondaire (L2),
les deuxièmes circuits de sortie sont connectés parallèlement au premier circuit de sortie au niveau du premier enroulement secondaire (L2), et
le premier circuit de sortie comprend une première diode (D1),
**caractérisé en ce que** le premier circuit de sortie comprend au moins une autre diode (D3, D4), l'au moins une autre diode (D3, D4) étant montée en série avec la première diode (D1).

2. Convertisseur de tension continue selon la revendication précédente, **caractérisé en ce qu'**un opto-coupleur (13) est disposé entre l'équipement de régulation (14) et le modulateur de largeur d'impulsion (12).

3. Convertisseur de tension continue selon l'une des revendications précédentes, **caractérisé en ce que** le premier circuit de sortie comprend une première borne de sortie (17) qui est raccordée au côté secondaire du transmetteur (11) par le biais de l'au moins une diode (D1), et dans lequel une première capacité de mémoire (C1) est montée en parallèle avec la première borne de sortie (17) .

4. Convertisseur de tension continue selon l'une des revendications précédentes, **caractérisé en ce que** le régulateur de tension (15) de chaque deuxième circuit de sortie fournit une deuxième borne de sortie (18), dans lequel le régulateur de tension (15) est raccordé au côté secondaire du transmetteur (11) par le biais d'une deuxième diode (D2), et dans lequel respectivement une deuxième capacité de mémoire (C2) est montée en parallèle avec le régulateur de tension (15) côté entrée.

5. Convertisseur de tension continue selon l'une des revendications précédentes 1 à 4, **caractérisé en ce que**
le régulateur de tension (15) de chaque deuxième circuit de sortie est constitué pour réguler une surtension au niveau du premier enroulement secondaire (L2).
